# EUROPEAN PATENT APPLICATION

(11) **EP 4 846 898 A1**
(43) Date of publication of application: **02.12.2026**
(21) Application number: 25382548.3
(22) Date of filing: 30.05.2025
(51) Int. Cl.: A47J 36/02, A47J 36/06

(54) **COOKING CONTAINER**

(71) Applicant: LEKUE, SAU, 08007 Barcelona (ES)
(72) Inventor: MANCINI, Guido, 08024 Barcelona (ES); GALLO SALGADO, Gabriela Margarita, 08917 Badalona (ES); CORTEGOSO MARQUEZ, Luis, 08011 Barcelona (ES)
(74) Representative: Torner, Juncosa I Associats, SL

(57) **Abstract**

A cooking container comprising a base receptacle (10), with a concave interior and a receptacle lip (11) at an upper portion, and a cover (20) with a cover lip (21) that has attached a cover annular frame (22) made of heat-resistant material, the cover (20) being removably coupled to the base receptacle (10) and the receptacle lip (11) having attached a receptacle annular frame (12) made of heat-resistant material and being in close contact with the cover annular frame (22) when the cover (20) is coupled to the base receptacle (10), providing sealing to the concave interior. The receptacle lip (11) protrudes laterally in cantilever on at least two opposed sides of the base receptacle defining receptacle handle configurations (13) that are fully lined with the receptacle annular frame (12). The receptacle annular frame 12 is in close contact with the cover annular frame 22, in overlapping, when the cover 20 is coupled to the base receptacle 10, providing sealing of the concave interior.

## Description

### Technical field

The present invention refers to a cooking container intended for culinary functions in particular for the processing of food products cooked in a microwave oven, and comprising a base receptacle and a cover, the latter advantageously provided with an overpressure valve, the base receptacle and the cover being made of heat resistant material and the cover including a cover lip complementary to a receptacle lip, the cover lip being configured to set on the receptacle lip closing the concave interior.

### Background of the Invention

GB2302263 A discloses a cooking apparatus with a cover, the cover being peripherally equipped with a heat-resisting silicon rubber ring that seals the gap between the cover and the cooking apparatus when the cover is covered on the cooking apparatus.

EP1996052 B1 reveals a cover for a culinary article comprising a cap adapted to cover the culinary article and a silicone frame running around the cap, the frame being moulded onto the cap and, in the radial direction, the frame extending at least 10 mm beyond the periphery of the cap and the frame comprising means formed by the peripheral rim of the frame for centring the cover on the culinary article.

US5799866 A divulges a food container device capable of storing food item for an extended period of time comprising a bottom wall, a sidewalls extending circumferentially and upwardly from a periphery of the bottom wall forming a cavity therein, a removable platform contained within the cavity for supporting food items within the cavity, means for supporting the removable platform within the cavity and a cover removably attached to an upper distal end of the sidewall.

EP1157648 A1describes a rigid container, which may be made of high temperature resistant glass, and a silicone cover that provides an airtight seal with the perimeter of the container, including a steam outlet valve in the cover.

US10793325 B2 refers to a vessel for one of cooking and storing one or more food items, the vessel being configured to be heated in a microwave oven while the vessel is sealed by a cover including an annular frame positioned to surround a perimeter of the cover, wherein a central portion of the cover has one or more valves configured to selectively allow air to vent out of a fluid retaining interior region of the container while the vessel is sealed by the cover.

With regard to the know prior art, the cooking container provided by the present invention provides means for maintaining a very effective hermetic seal of the cooking container during cooking within the container and after cooking, ensures effective protection of the container's handles and furthermore provides particularly favorable conditions for handling the container cover, the container and a removable platform for food sustentation inside the container at a certain distance from the bottom.

### Description of the Invention

The present invention concerns to a cooking container as defined in claim 1, and comprise, according to the known state of the art:
a base receptacle, made of heat-resistant material, such as tempered glass or of borosilicate glass, with a bottom wall and peripheral walls defining a concave interior, the peripheral walls having a lower portion connected to the bottom wall and an upper portion defining a receptacle lip of the base receptacle surrounding a mouth of the concave interior;
a cover, made of heat-resistant material, such as tempered glass or of borosilicate glass removably coupled to the base receptacle, the cover including a cover lip complementary to the receptacle lip, the cover lip being configured to set on the receptacle lip closing the concave interior; and
a cover annular frame made of a flexible heat-resistant material, preferably elastomeric, and attached to the cover lip, the cover annular frame being interposed between the cover lip and the receptacle lip when the cover is coupled to the base receptacle.

According to this invention the cooking container further comprises a receptacle annular frame made of a flexible heat-resistant material, preferably elastomeric and firmly attached to the receptacle lip, the receptacle annular frame being in close contact in overlapping with the cover annular frame when the cover is coupled to the base receptacle, providing a highly effective sealing to the concave interior.

In addition, the receptacle lip protrudes laterally in cantilever on at least two opposed sides of the base receptacle defining receptacle handle configurations that are fully lined with the receptacle annular frame, providing thermally insulated handles that effectively protect and facilitate the handling of the cooking container, in particular after a cooking operation.

According to the invention the cover lip also protrudes laterally in cantilever on at least two opposed sides of the cover defining cover handle configurations that are fully lined with the cover annular frame.

Through this arrangement of elements when the cover is coupled to the base receptacle, for closing it, the cover annular frame seats and adheres on the receptacle annular frame, providing a very effective sealing of the container for the cooking stage. In addition, in this situation of closure of the container by the cover the cover handle configurations are overlapped to the receptacle handle configurations, and the handling of the assembly for both insertion and removal of the container with regard to a cooking unit is facilitated.

Moreover, an external edge of the cover annular frame, in a region of the cover handle configurations adjacent to the receptacle annular frame, defines a stepped configuration protruding outwardly from the contact point between the cover annular frame and the receptacle annular frame. This stepped configuration provides an efficient means, with thermal isolation, of gripping the cover in relation to the body of the container.

According to a preferred embodiment the cover comprises a top wall and peripheral walls defining a concave interior, the peripheral walls having an upper portion connected to the top wall and with the cover lip defined on a lower portion of the peripheral walls surrounding a mouth of the concave interior. In addition, the cover annular frame extends upwardly over an external surface of the cover, in a region adjacent to the cover handle configurations.

In all the embodiments of this invention an external perimeter of the peripheral walls of the cover is smaller than an inner perimeter of the receptacle and configured to allow the insertion of the cover in the receptacle in an inverted position facilitating storage and packaging/transport.

An annular protrusion extends downwardly from an inner edge of the cover lip, the annular protrusion being surrounded by the receptacle inner edge of the base receptacle when the cover is coupled to the base receptacle, this downwardly annular protrusion contributes to the centring of the cover when coupled to the base receptacle.

The external surface of the annular protrusion of the cover is protected by an extension of the cover annular frame. In an alternative embodiment the inner edge of the base receptacle facing the annular protrusion is lined with an extension of the receptacle annular frame (12). The two alternatives ensure that the annular protrusion does not come into direct contact with the inner edge of the receptacle, i.e. that no glass parts are ever in contact with each other.

In an alternative embodiment the inner edge of the cover lip has no protrusion, and the cover annular frame include an annular extension protruding downward from the cover lip, the annular extension being surrounded by the receptacle edge of the base receptacle when the cover is coupled to the base receptacle, this downwardly annular extension contributing in this embodiment to the centring of the cover when coupled to the base receptacle and also avoids contact between the glass parts of the cover and receptacle.

The cover further incorporates an opening with an overpressure valve associated therewith preferably located in a position central to the cover deck top. The overpressure valve is attached to the opening by three angularly spaced lugs that provide between them and the opening passages ensuring a permanent free communication from inside the base receptacle to the outside, thus preventing any overpressure inside the receptacle during cooking from accidentally lifting the cover.

The receptacle annular frame extends downwardly over an external surface of the base receptacle, in a region adjacent to the receptacle handle configurations and includes, in a region coincident and/or adjacent to the receptacle handle configurations, heat dissipation configurations which facilitate the handling of such handles, by reducing their temperature after cooking.

In addition, the receptacle annular frame and/or the cover annular frame includes first discrete spacers at least on an inner side thereof in contact with the receptacle handle configurations and/or with the cover handle configurations. These spacers obtained for example as ribs, keep the frame positioned on the glass (cover or receptacle) and provide an increased thermal insulation in that affording the presence of air inside of the handles (space between the inner side of the annular frame and the glass surface). This also represents an optimization of the flexible material of the cited cover and receptacle frames.

To facilitate the cooking of the food the proposed cooking container further comprises a removable platform contained within the concave interior of the base receptacle, an outer edge of the removable platform including a platform annular frame made of flexible heat-resistant material attached thereto.

The platform annular frame further includes second discrete spacers there around facing and contacting the inner lateral surfaces of the base receptacle, creating gaps between the platform annular frame and the inner lateral surfaces of the base receptacle for steam circulation and retaining the removable platform at a distance of the bottom wall. These second discrete spacers also retain the removable platform at a distance of the bottom wall.

In a preferred embodiment the platform annular frame further includes third discrete spacers on its interior facing and contacting the removable platform, as in the cover and receptacle frames.

In a preferred embodiment the removable platform is perforated.

### Additionally

In order to be able to properly handle the removable platform, the platform annular frame protrudes upwardly in cantilever on at least two opposed sides of the removable platform defining platform handle configurations. In a preferred embodiment these platform handle configurations are flexible enough to fold inward for easy placement inside the receptacle in both operating and storage position.

According to an embodiment the glass cover and glass receptacle are provided with a non-stick coating applied to its inner side.

The receptacle annular frame, the cover annular frame and the platform annular frame provide protective peripheral frames that in a preferred embodiment are made of elastomeric silicone or platinum silicone.

### Brief description of the Figures

The foregoing and other advantages and features will be more fully understood from the following detailed description of an embodiment with reference to the accompanying drawings, to be taken in an illustrative and non-limitative manner, in which:

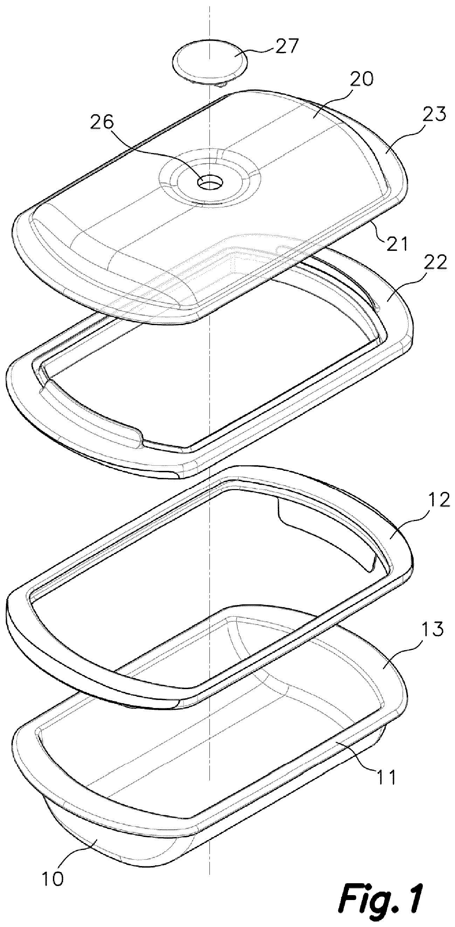

Fig. 1 is an exploded perspective view showing only the cover and base receptacle, with its cover annular frame and receptacle annular frame detached and the overpressure valve associated with the cover also detached.
Fig. 2 is an exploded perspective view showing the cover and base receptacle with the cover annular frame and the receptacle annular frame mounted on the cover lip and receptacle lip respectively and the removable platform intended to be placed inside the cooking container, with its platform annular frame detached. In this Fig. 2 an enlarged detail about the structure of the inner side of the cover frame and receptacle frame has been included.

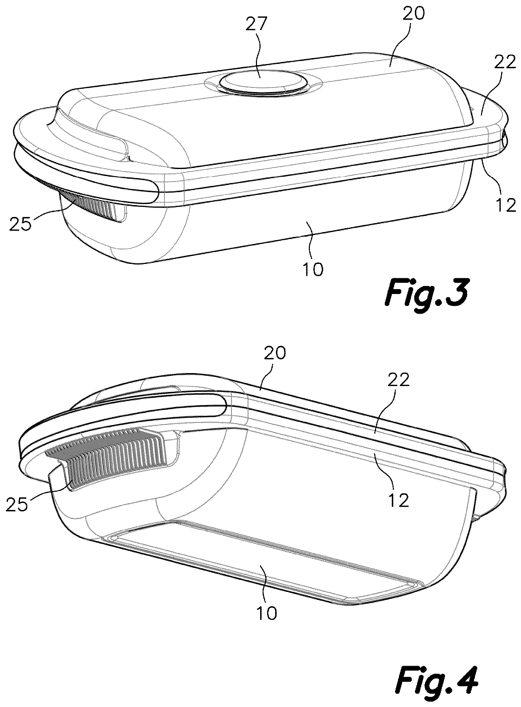

Fig. 3 and Fig. 4 are perspective views of the cooking container closed with its cover.
Fig 5 is a cross sectional view of the cooking container, according to a first embodiment, through a plane containing the end handles, the cooking container being closed by its cover, the view illustrating the features and relative position of the elements defining the invention, in particular the annular frames associated to the cover, base receptacle, as well as the overpressure valve, this embodiment including centering configurations protruding downwardly from the cover lip and inserted in the interior of the receptacle.
Fig. 6 is a transversal cross sectional view of the cooking container shown in Fig. 5, which shows the arrangement of the annular frames associated with the cover and base receptacle, in a zone that does not contain the handles, as well as the overpressure valve.

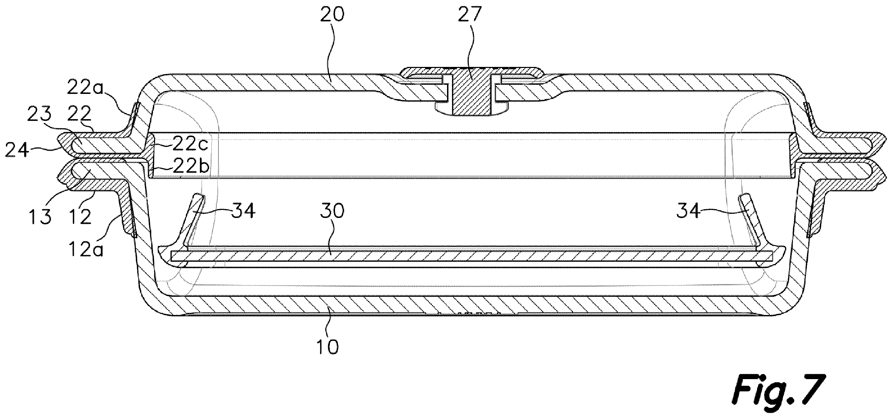

Fig 7 is a cross sectional view of the cooking container, according to a second embodiment, through a plane containing the end handles, the cooking container being closed by its cover, the view illustrating the features and relative position of the elements defining the invention, in particular the annular frames associated to the cover, base receptacle, as well as the overpressure valve, in this embodiment the cover annular frame including an annular extension protruding downward from cover lip, surrounded by the receptacle edge of the base receptacle 10, providing centring of the cover, and including a removable platform.
Fig. 8 is a transversal cross sectional view of the cooking container shown in Fig. 7, which shows the arrangement of the annular frames associated with the cover and base receptacle, in a zone that does not contain the handles, as well as the overpressure valve.
Fig. 9 is a horizontal cross sectional made along a plane containing the removable platform showing the arrangement of the annular frame of the removable platform in relation to the side walls of the base receptacle providing some support points. In this Fig. 9 an enlarged detail about the structure of the inner side of the platform frame has been included.
Fig. 10 is a perspective view of an embodiment of the over-pressure valve.
Fig. 11 is an enlarged detail of an alternative of protection of the centering protrusion of the cover with regard to the inner edge of the base receptacle.

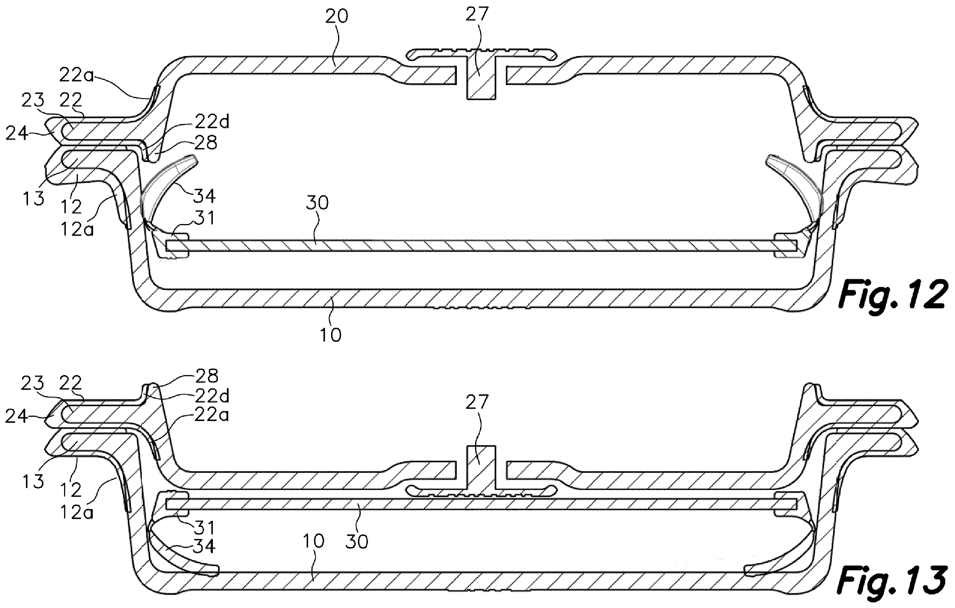

Lastly Figs. 12 and 13 are cross sectional views illustrating the elements: cover and platform in an operative cooking position and in a storage or packaging arrangement with insertion of the cover and the platform in the receptacle in an inverted position.

### Detailed Description of the Invention and of particular embodiments

The cooking container described herein comprises according to the known state of the art a base receptacle 10, made of heat-resistant material, with a bottom wall and peripheral walls defining a concave interior, suitable for containing a food that must be cooked, the peripheral walls having a lower portion connected to the bottom wall and with an upper portion defining a receptacle lip 11 of the base receptacle 10 surrounding a mouth of the concave interior. The cooking container 10 is completed by a cover 20, made of heat-resistant material, removably coupled to the base receptacle 10, the cover 20 including a cover lip 21 complementary to the receptacle lip 11, the cover lip 21 being configured to set on the receptacle lip 11 closing the concave interior. The cover 20 further includes a cover annular frame 22 made of heat-resistant material and attached to the cover lip 21, the cover annular frame 22 being interposed between the cover lip 21 and the receptacle lip 11 when the cover 20 is coupled to the base receptacle 10.

In the shown embodiment the cover 20 comprises a top wall and peripheral walls defining a concave interior, the peripheral walls having an upper portion connected to the top wall and with the cover lip 21 defined on a lower portion of the peripheral walls surrounding a mouth of the concave interior of the base receptacle 10

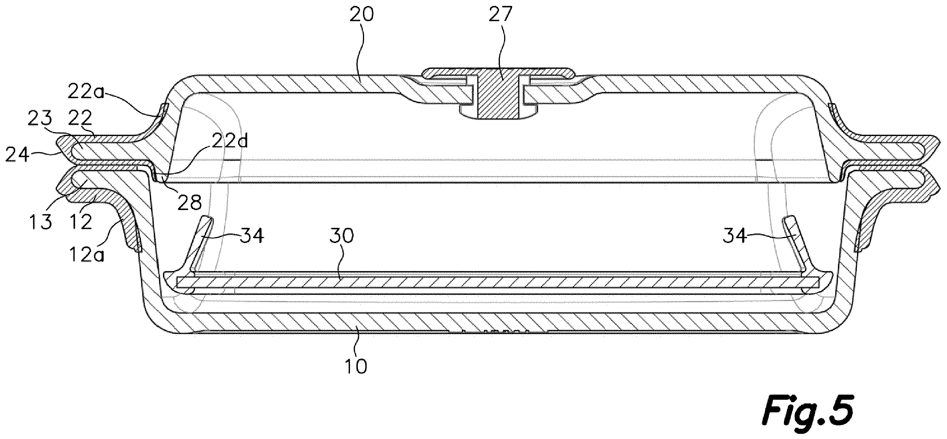

As previously indicated and in accordance with this invention the cooking container further comprises a receptacle annular frame 12 made of heat-resistant material and attached to the receptacle lip 11, the receptacle annular frame 12 being in close contact with the cover annular frame 22, in overlapping (see Figs. 5 - 8), when the cover 20 is coupled to the base receptacle 10, providing an efficient sealing of the concave interior.

As clearly shown, particularly in Figs. 5 and 7, the receptacle lip 11 protrudes laterally in cantilever on at least two opposed sides of the base receptacle defining receptacle handle configurations 13 that are fully lined with the receptacle annular frame 12.

Likewise, the cover lip 21 protrudes laterally in cantilever on at least two opposed sides of the cover defining cover handle configurations 23. The cover handle configurations 23 are overlapped to the receptacle handle configurations 13 when the cover 20 is coupled to the base receptacle, and the cover handle configurations 23 are fully lined with the cover annular frame 22.

In this way when the lid is positioned, centred over the opening of the container, there is always contact between the annular frames 12 and 22 made of a flexible heat-resistant material providing an effective seal and avoiding any glass interaction.

Figs. 5 and 7 also show that an external edge of the cover annular frame 22, in a region of the cover handle configurations 23 adjacent to the receptacle annular frame 12, defines a stepped gripping configuration 24 protruding outwardly from the contact point between the cover annular frame 22 and the receptacle annular frame 12.

The gripping configuration 24 of the illustrated embodiment provides a protection in a grip area of the cover 10 to shield the fingers from touching the glass directly when it is hot after a cooking step.

The receptacle annular frame 12 further extends downwardly by a portion 12a over an external surface of the base receptacle 10, in a region adjacent to the receptacle handle configurations 13 also providing an additional protection in the grip area by avoiding contact with the outer side wall of the base container 10.

The cover annular frame 22 further extends upwardly by a portion 22a over an external surface of the cover 20, in a region adjacent to the receptacle handle configurations 13 or adjacent to the cover handle configurations 23.

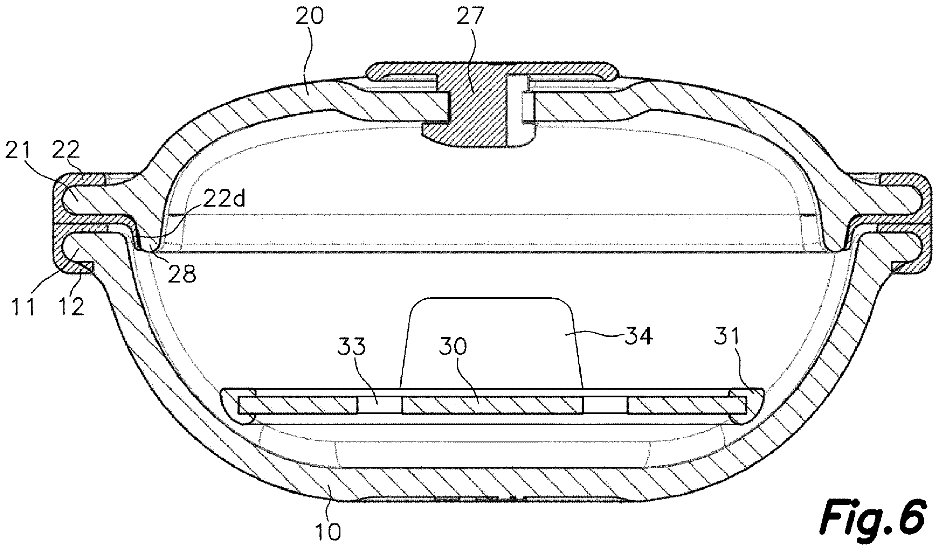

Ina preferred embodiment (Figs. 5 and 6) an annular protrusion 28 extends downwardly from an inner edge of the cover lip 28, the annular protrusion being surrounded by the receptacle inner edge of the base receptacle 10 when the cover 20 is coupled to the base receptacle 10, this downwardly annular protrusion 28 contributes to the centring of the cover 20 when coupled to the base receptacle 10, and facilitates the fitting of the cover 20 to the base receptacle 10. The external surface of the annular protrusion 28 is protected by an extension 22d of the cover annular frame 22 thus ensuring that the receptacle inner edge is not damaged by the centring protrusion 28 of the cover 20.

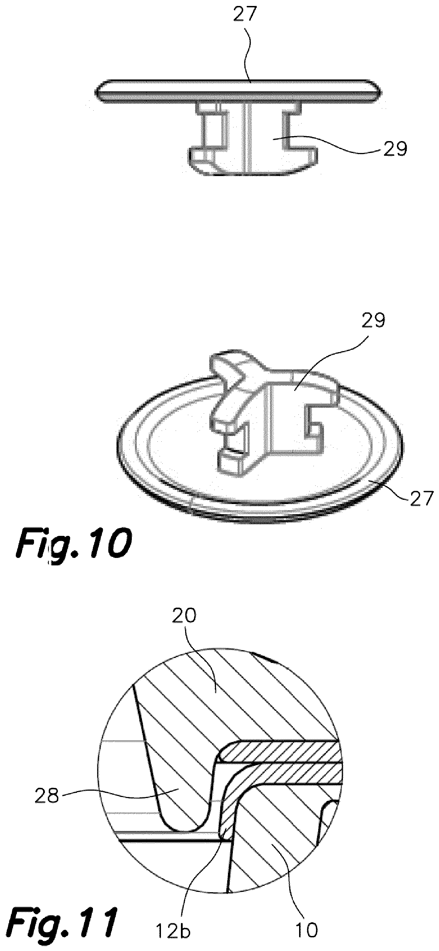

In an alternative embodiment illustrated in Fig. 11, the inner edge of the base receptacle 10 facing the annular protrusion 28 is lined with an extension 12b of the receptacle annular frame 12 and the annular protrusion 28 is not protected.

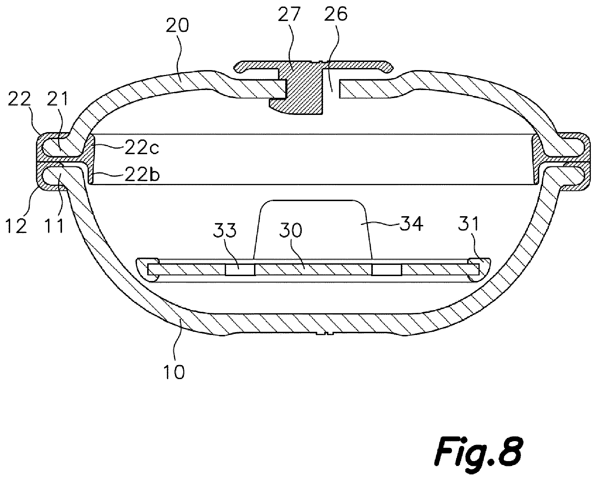

In another further alternative embodiment (Figs. 7 and 8), the cover annular frame 22 includes an annular extension 22b protruding downward from the cover lip 21, the annular extension 22b being surrounded by the receptacle inner edge of the base receptacle 10 when the cover 20 is coupled to the base receptacle 10, the annular extension 22b providing in this embodiment a means helping in a centring of the cover 20 with respect to the opening of the base receptacle 10.

Heat dissipation configurations 25 are provided in the receptacle annular frame 12 in a region coincident and/or adjacent to the receptacle handle configurations 13 and/or adjacent to the cover handle configurations 23, to reduce the temperature in such areas.

Heat dissipation configurations (not illustrated) can also be included in the cover annular frame 22 in a region coincident and/or adjacent to the receptacle handle configurations 13 and/or adjacent to the cover handle configurations 23, for the same purpose.

As previously indicated, in order to further increase the thermal insulation in the handling of the cooking container.the receptacle annular frame 12 and/or the cover annular frame 22 includes first discrete spacers 40 at least on an inner side thereof in contact with the receptacle handle configurations 13 and/or with the cover handle configurations 2).

As clearly shown in Figs. 5 to 8, the cover lip 21 is completely contained within the cover annular frame 22. In the embodiment of Figs. 5 and 6 the cover annular frame 22 extends from an external side of the cover 22a to the portion 22d that protects the external surface of the annular protrusion 28, and in the embodiment of Figs. 7 and 8 the cover annular frame 22 extends from an inner side 22c of the cover 20 to an outer side 22a of the cover 20.

On the other hand, the receptacle lip 11 is not completely contained within the receptacle annular frame 12, so that the receptacle annular frame 12 extends only from an outer portion of the receptacle lip 11 to s portion 12a resting on +an outer side of the base receptacle 10, leaving exposed an inner portion of the receptacle lip 11 adjacent to the concave interior.

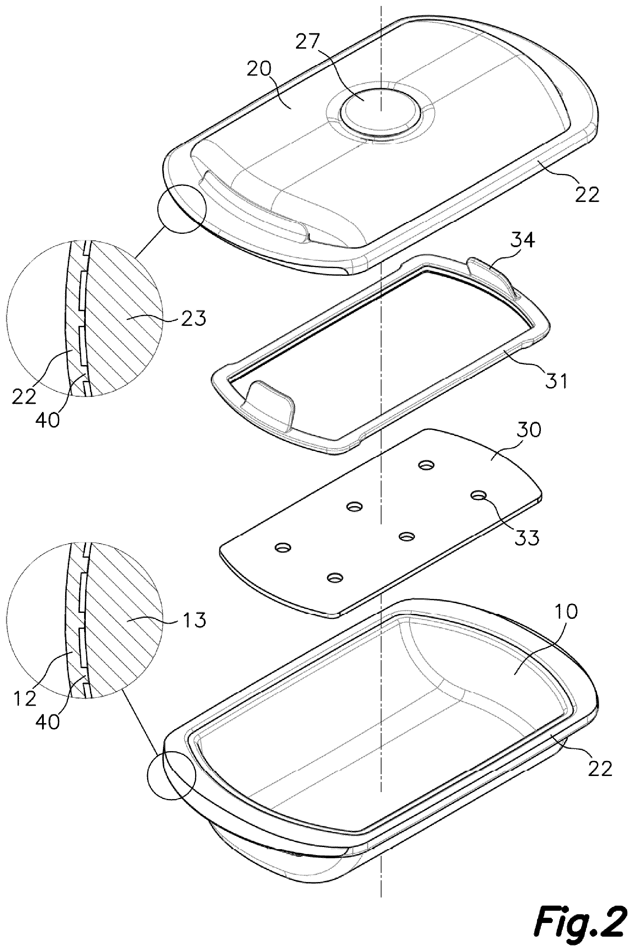

As can be seen in Figs. 2, 5 to 8, and 9, and 12-13 the cooking container further comprises a removable platform 30 contained within the concave interior of the base receptacle 10, an outer edge of the removable platform including a platform annular frame 31 of heat resistant material attached thereto.

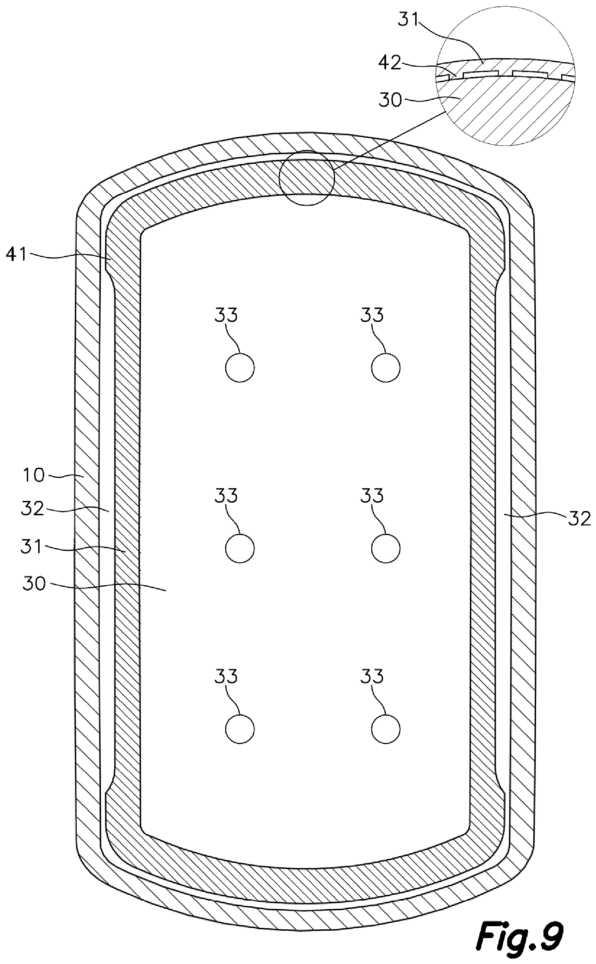

The platform annular frame 31 includes second discrete spacers 41 there around facing and contacting the inner lateral surfaces of the base receptacle 10, creating gaps 32 (see Fig. 9) between the platform annular frame and the inner lateral surfaces of the base receptacle 10 for steam circulation during cooking of food and retaining the removable platform 30 at a distance of the bottom wall.

The platform annular frame 31 includes third discrete spacers 42 on its interior facing and contacting the removable platform 30 as well as the cover annular frame 22 and receptacle annular frame 12 increasing the thermal insulation.

In a preferred embodiment the removable platform 30 is perforated.

In the embodiments of Figs. 5 and 7 is shown that the platform annular frame 31 protrudes upwardly in cantilever on at least two opposed sides of the removable platform 30 defining respective platform handle configurations 34. In a preferred embodiment (see Figs. 12 and 13) the flexibility of the platform handled configurations 34 enables them to be easily folded inwards, so that in the storage or packaging arrangement illustrated in Fig. 13 the folding of these elements 34 facilitates the arrangement of the inverted platform 30, arranged against the bottom of the base receptacle 10, and underneath the cover 20, also arranged in an inverted position inserted in the mouth of the base receptacle 10.

As per a preferred embodiment both the base receptacle 10, the cover 20 and the removable platform 30 are made of tempered glass or of borosilicate glass and the annular frames 12, 22 and 31 are made of silicone or platinum silicone, preferably elastomeric.

In a preferred embodiment a non-stick coating of the glass by texturing, is applied on the inside of glass of the base receptacle 10 and on the inside of the glass of the cover 20.

The arrangement of the disclosed elements provides a secure grip because the glass handles of the base receptacle 10 and the cover 20 are covered by silicone sleeves integrated into the peripheral frames 12, 22 forming a single piece that tightly embraces the glass. Furthermore, the peripheral frames 12, 22 and 31 are dimensioned to take into account the expansion of the silicone caused by hot temperatures during cooking, so that they are securely mounted in both hot and cold environments. The silicone frames further allow a safe handling of the cover, container and the removable platform while protecting the extremities of the glass bodies.

The proposed arrangement is also ergonomic because it provides an effective thermal insulation by means of a distribution of the thickness of the frames 12, 22 and31 and by the presence of heat dissipation configurations 25 and spacers 40, 42 in the most needed areas.

On the other hand, the overlapping of the peripheral frame 22 of the cover and frame 12 of the cooking container when the cover 20 closes the opening of the base receptacle 10 determines a very effective sealing of the cooking container and at the same time avoids cracks between the glass rims.

In addition, the cover 20 of the cooking container includes, located in a position central to the cover deck top, an opening 26 with an overpressure valve 27 associated therewith, which allows gases to escape from the inside of the cooking container during a cooking stage.

The overpressure valve 27 is shown in Fig. 10 showing that it comprises three angularly spaced lugs 29 for attachment to the opening 26 of the cover 20, providing between said lugs 29 passages ensuring a permanent free communication from inside the base receptacle to the outside, thus preventing any overpressure inside the receptacle during cooking from accidentally lifting the cover.

## Claims

1. A cooking container comprising:
a base receptacle (10), made of heat-resistant material, with a bottom wall and peripheral walls defining a concave interior, the peripheral walls having a lower portion connected to the bottom wall and with an upper portion defining a receptacle lip (11) of the base receptacle (10) surrounding a mouth of the concave interior;
a cover (20), made of heat-resistant material, removably coupled to the base receptacle, the cover including a cover lip (21) complementary to the receptacle lip (11), the cover lip (21) being configured to set on the receptacle lip (11) closing the concave interior; and
a cover annular frame (22) made of a flexible heat-resistant material and attached to the cover lip (21), the cover annular frame (22) being interposed between the cover lip (21) and the receptacle lip (11) when the cover (20) is coupled to the base receptacle (10);
**characterized in that** the cooking container further comprises a receptacle annular frame (12) made of a flexible heat-resistant material and attached to the receptacle lip (11), the receptacle annular frame (12) being in close contact with the cover annular frame (22) when the cover (20) is coupled to the base receptacle (10), providing sealing to the concave interior; and
the receptacle lip (11) protrudes laterally in cantilever on at least two opposed sides of the base receptacle defining receptacle handle configurations (13); and wherein
the receptacle handle configurations (13) are fully lined with the receptacle annular frame (12).

2. The cooking container according to claim 1 wherein the cover lip (21) protrudes laterally in cantilever on at least two opposed sides of the cover (20) defining cover handle configurations (23); and wherein the cover handle configurations (23) are fully lined with the cover annular frame (22).

3. The cooking container according to claim 2 wherein an external edge of the cover annular frame (22), in a region of the cover handle configurations (23) adjacent to the receptacle annular frame (12), defines a stepped gripping configuration (24) protruding outwardly from the contact point between the cover annular frame (22) and the receptacle annular frame (12).

4. The cooking container according to any preceding claim wherein the cover (20) comprises a top wall and peripheral walls defining a concave interior, and wherein the cover annular frame (22) extends upwardly over an external surface of the cover, in a region adjacent to the receptacle handle configurations (13) or adjacent to the cover handle configurations (23).

5. The cooking container according to claim 4 wherein an external perimeter of the peripheral walls of the cover is smaller than an inner perimeter of the receptacle and configured to allow the insertion of the cover in the receptacle in an inverted position.

6. The cooking container according to any preceding claim wherein the receptacle annular frame (12) extends downwardly over an external surface of the base receptacle (10), in a region adjacent to the receptacle handle configurations (13).

7. The cooking container according to any preceding claim wherein:
the receptacle annular frame (12) and/or the cover annular frame (22) includes heat dissipation configurations (25) in a region coincident or adjacent to the receptacle handle configurations (13) or coincident or adjacent to the cover handle configurations (23); and/or
the receptacle annular frame (12) and/or the cover annular frame (22) includes first discrete spacers (40) at least on an inner side thereof in contact with the receptacle handle configurations (13) and/or with the cover handle configurations (23).

8. The cooking container according to any preceding claim wherein
the cover lip (21) includes an annular protrusion (28) extending downwardly from an inner edge thereof, the annular protrusion (28) providing a centring of the cover (20) by being surrounded by the inner edge of the base receptacle (10) when the cover (20) is coupled to the base receptacle (10).

9. The cooking container according to claim 8 wherein the external surface of the annular protrusion (28) is lined by an extension (22d) of the cover annular frame (22), and/or wherein the inner edge of the base receptacle (10) facing the annular protrusion (28) is lined with an extension (12b) of the receptacle annular frame (12).

10. The cooking container according to any one of the claims 1 to 7 wherein cover annular frame (22) includes an annular extension (22b) protruding downward from cover lip (21), the annular extension (22b) being surrounded by the edge of the base receptacle (10) when the cover (20) is coupled to the base receptacle (10) and providing a centring of the cover (20).

11. The cooking container according to any preceding claim wherein
the cooking container further comprises a removable platform (30), or a removable perforated platform (30), contained within the concave interior of the base receptacle (10), an outer edge of the removable platform including a platform annular frame (31) made of flexible heat-resistant material attached thereto; wherein
the platform annular frame (31) includes second discrete spacers (41) there around facing and contacting the inner lateral surfaces of the base receptacle (10), creating gaps (32) between the platform annular frame and the inner lateral surfaces of the base receptacle (10) for steam circulation and retaining the removable platform (30) at a distance of the bottom wall; and/or the platform annular frame (31) includes third discrete spacers (42) on its interior facing and contacting the removable platform (30).

12. The cooking container according to any one of the claims 10 or 11 wherein the platform annular frame (31) protrudes upwardly in cantilever on at least two opposed sides of the removable platform defining platform handle configurations (34).

13. The cooking container according to any preceding claim wherein the cover (20) includes an opening (26) with an overpressure valve (27) associated therewith, wherein the overpressure valve (27) comprises three angularly spaced lugs (29) for attachment to the opening (26) of the cover 20, providing between said lugs (29) and the opening (26) a permanent free communication from inside the base receptacle (10) to the outside.

14. The cooking container according to any preceding claim wherein the base receptacle (10) and the cover (20), or the base receptacle (10), the cover (20) and the removable platform (30), are made of glass; and/or wherein the receptacle annular frame (11), the cover annular frame (22) and the platform annular frame (31) are made of silicone or platinum silicone.

15. The cooking container according to any preceding claim wherein
the cover lip (21) is completely contained within the cover annular frame (22); and wherein
the receptacle lip (11) is not completely contained within the receptacle annular frame (12), the receptacle annular frame (12) extending only from an outer portion of the receptacle lip (11) to an outer side of the base receptacle (10), leaving exposed an inner portion of the receptacle lip (11) adjacent to the concave interior.
